Europäisches Patentamt

(19) European Patent Office

Office européen des brevets

(11) Publication number: **0 020 910**
**B1**

(12) **EUROPEAN PATENT SPECIFICATION**

(45) Date of publication of patent specification: **31.08.83**

(51) Int. Cl.³: **H 04 N 9/20**

(21) Application number: **80102084.3**

(22) Date of filing: **18.04.80**

(54) **Colour cathode-ray tube apparatus.**

(30) Priority: **27.06.79 GB 7922386**

(43) Date of publication of application:
**07.01.81 Bulletin 81/1**

(45) Publication of the grant of the patent:
**31.08.83 Bulletin 83/35**

(84) Designated Contracting States:
**DE FR GB IT**

(56) References cited:
**US - A - 2 892 019**
**US - A - 3 135 824**

**TECHNISCHE MITTEILUNGEN AEG-
TELEFUNKEN, vol. 61, no. 4, 1971, Berlin, DE A.
GEYER et al. "Demontierbare Farbbildröhre",
pages 216—221**

(73) Proprietor: **International Business Machines
Corporation
Old Orchard Road
Armonk, N.Y. 10504 (US)**

(72) Inventor: **Judd, Ian David
82 Ashdown Road Chandlers Ford
Eastleigh Hampshire (GB)**
Inventor: **Paton, Andrew
3 Oakwood Road Chandlers Ford
Eastleigh Hampshire (GB)**

(74) Representative: **Blake, John
IBM United Kingdom Patent Operations Hursley
Park
Winchester Hants, S021 2JN (GB)**

Colour cathode-ray tube apparatus

This invention relates to colour cathode-ray tube apparatus of the shadow mask type.

Although colour cathode-ray tube technology is advancing at an extraordinary rate, the application setting the standards for technology is domestic television. In this application the screen is intended to be viewed at a distance of two or three metres and the tolerance of the viewer to marginal picture distortion and colour convergence and purity inaccuracies is, with minor exceptions, high. Much higher standards are required if a colour cathode-ray tube is to be used in a display terminal for the display of alphanumeric and graphical data. The user is only about one-half metre from the tube and the requirement may be to display over 3,000 clearly distinguishable characters. This postulates extremely precise control of the electron beams of the cathode-ray tube.

Control of the position of an electron beam using feedback is known in electron microscopes and in beam-indexing cathode-ray tubes. Electron microscope technology is so different from that of the cathode-ray tube as to provide little assistance to the latter. Beam-indexing tubes rely on detecting the position of an electron beam at the screen of the tube. Typical such systems are described in British Patent Specifications 1,403,061, 1,195,588 and 1,006,697. The first two Specifications describe various means of deriving information from the screen such as by secondary emission or currents generated in conductors by the electron beam. Specification 1,006,697 describes beam position detection by noting the instants at which the beam touches a conductor arranged in serpentine fashion and positioned a short distance from the screen. All beam-indexing systems rely on electron beams selectively activating phosphors arranged in vertical strips on the tube screen. As the required resolution of the picture increases, so the widths of the phosphor strips decrease and so must the size of the electron beam. At the resolution required of data display terminals, even were the electron beam size to be achieved, the picture brightness would be below acceptable standards. Application of some of the techniques used in beam-indexing tubes to a shadow mask tube is possible, but all require costly adaptation of the tube.

US Patent 2,892,019 describes an arrangement in which it is sensed when the beam is between apertures in the shadow mask: by reducing the beam current during such parts of the scan, the average beam current is reduced enabling a cheaper high voltage power supply to be used.

An object of the present invention is to obtain feedback signals from which beam positional information can be derived without the necessity for complex modification of the shadow mask tube.

According to the invention, colour cathode ray tube apparatus includes a multibeam colour cathode ray tube having a shadow mask, means for scanning said electron beams in a raster scan, and means for deriving a signal representative of the electron beam current intercepted by the shadow mask, characterised in that said apparatus further comprises feedback means to adjust the position of the raster scan in accordance with said derived signal so as to tend to reduce the proportion of beam current intercepted by the shadow mask.

The signal may be representative of currents generated by the electron beam in the shadow mask or in the conductive layer at the tube screen, but preferably the said means to derive a signal comprises means to detect the differences in currents generated by an electron beam at the shadow mask and at the screen.

In the shadow mask tube, the screen is maintained at the same high potential as at the shadow mask by means of a thin conductive layer of aluminium. According to the difference current embodiment of the invention the ends of the primary winding of a transformer are connected respectively to the shadow mask and the conductive layer. A centre tap of the primary winding is connected to the source of high potential. A secondary winding of the transformer, one end of which is connected to ground potential, detects the difference in the currents generated in the shadow mask and at the screen by an electron beam.

The invention is further explained, by way of example, with reference to the drawings, in which:

Figure 1 is a schematic of cathode-ray tube apparatus indicating how difference currents are obtained in the preferred embodiment of the invention;

Figure 2 illustrates how different currents are generated in the shadow mask and at the screen of a cathode-ray tube as the position of an electron beam changes;

Figure 3 shows a modified shadow mask which generates distinctive difference currents in accordance with the vertical position of an electron beam;

Figure 4 is a waveform of difference currents derived from the shadow mask of Figure 3;

Figures 5, 6 and 7 illustrate one use of a shadow mask according to Figure 3;

Figure 8 shows another design of shadow mask particularly suitable for generating difference currents;

Figure 9 is a block diagram of colour shadow mask cathode-ray tube apparatus using the mask of Figure 8;

Figures 10 to 13 are graphs showing difference currents and other signals generated in the system of Figure 9; and

Figure 14 illustrates convergence correction apparatus using beam position error signals generated by the system of Figure 9.

Figures 15 and 16 illustrate different means for deriving a signal representative of the electron beam current intercepted by the shadow mask.

Operation of the invention depends on the fact that in different positions of an electron beam relative to the apertures in a shadow mask, different values of current are intercepted by the shadow mask. The value of the intercepted current can be detected by detecting the current in the shadow mask, or by detecting the current in the conductive layer at the screen, i.e., by detecting the beam passing through the apertures in the shadow mask, which is, of course, a measure of the beam current intercepted by the shadow mask, or by detecting the difference between the currents generated by the beam in the shadow mask and at the screen. The detection of difference currents has the advantage of doubling the rate of change of the signal as the beam moves across the shadow mask. If E is the beam current and A is a fraction representing the proportion of E intercepted by the shadow mask, the three methods detect respectively $E.A$, $E(1-A)$, and $E(A-(1-A))=E(2A-1)$.

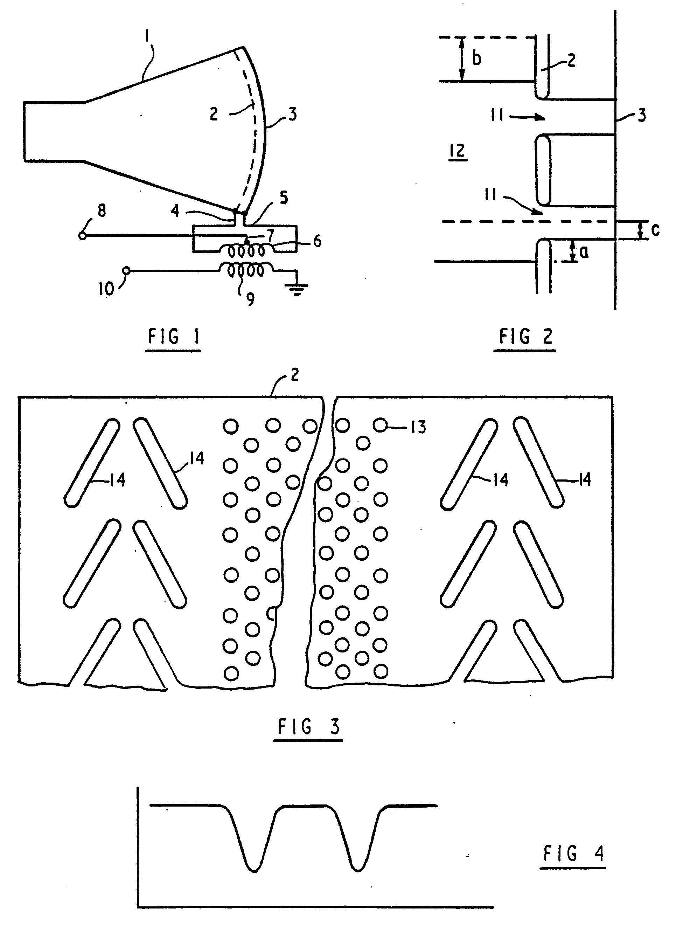

Referring to Figure 1, in the embodiment of the invention in which difference currents are detected a colour cathode-ray tube 1 has a shadow mask 2 and a conductive layer 3 at the screen, provided for the purpose of maintaining the screen at high potential, usually the potential of the final anode of the electron guns (not shown). Conductors 4, 5 are connected between, respectively, the shadow mask 2 and the conductive layer 3 and the ends of the primary winding 6 of a transformer. A centre tap 7 of winding 6 is connected to a terminal 8 at which the high potential is available. A secondary winding 9 of the transformer is connected between ground and a terminal 10. At terminal 10, a current appears which represents the difference between the currents generated by an electron beam in the shadow mask 2 and the conductive layer 3. It will be noted that a direct current signal is not obtained. As an electron beam traces a raster over the shadow mask, varying fractions of the beam are intercepted by the shadow mask and generate currents therein. The remainder of the beam passes through the apertures in the shadow mask, lands on the conductive layer and generates currents in the layer. The relative sizes of the currents in the shadow mask and the conductive layer, and thus the difference between the currents, indicates the fraction of the beam intercepted by the shadow mask. Figure 2 is illustrative and shows a cross-section of part of the shadow-mask 2 with apertures 11 and the conductive layer 3. An electron beam 12 is shown in two positions, its boundaries in the two positions being indicated by continuous and by dotted lines respectively. For simplicity, we restrict the discussion to the two-dimensional case. The difference between the currents in the shadow mask 2 in the two position of the beam is positive and proportional to $(b-a)$. The difference in the currents in the conductive layer 3 is negative and proportional to $c=(b-a)$. The difference in the currents detected at terminal 10 (Figure 1) is $(b-a+c)=2(b-a)$. While the argument is rather simplistic, it does not, for example, take account of the electron density across the beam, it does show that in different positions of the beam different currents will be generated in the shadow mask 2 and the conductive layer 3.

Figure 3 illustrates one embodiment of the invention, showing the part a shadow mask 2 with the conventional arrangement of holes 13. At the edges of the shadow mask are formed apertures 14 of such shape and relative disposition as to provide distinctive signals. As shown in Figure 3 the apertures 14 are slots, angled to provide an inverted V pattern. If an electron beam is caused to trace a horizontal line raster over the shadow mask depicted in Figure 3 the difference currents generated by a pair of adjacent apertures 14 will have the distinct form shown in Figure 4. The difference current is at a maximum when no part of the electron beam is striking the screen and declines to a minimum as the beam crosses an aperture 14. The time interval between the minima caused by the beam crossing two adjacent apertures 14 is representative of the vertical position of the beam in that segment of the screen containing the apertures. Figure 4 also shows the shape of the signal generated by the shadow mask current alone, and is the inverse of the signal generated by the screen current alone. In all three cases the signals are distinctive. We describe the use of apertures 14 in terms of difference currents but screen or mask currents can equally well be detected.

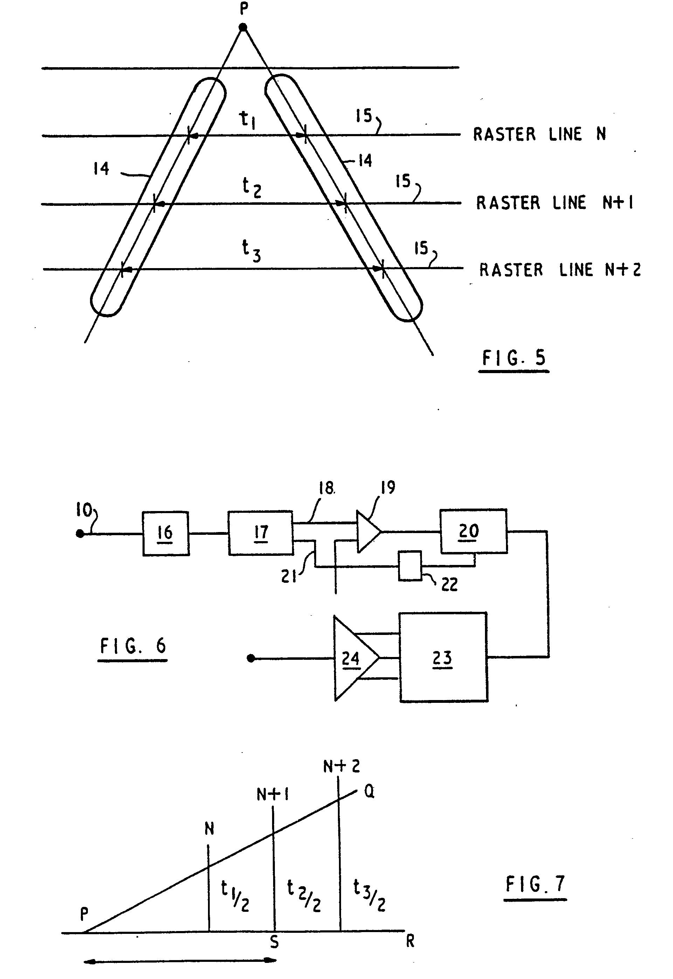

Referring to Figure 5, a single pair of apertures 14 is shown together with some lines 15 of a horizontal line raster. The apertures 14 define a notional point P on the shadow mask and it is possible, from the difference currents generated by the raster lines 15 crossing apertures 14, to determine the position of the raster relative to P. From this information the position of the raster relative to the shadow mask can be adjusted. Referring to Figure 6, terminal 10 (Figure 1) is connected to a pulse peak detector 16, the output of which is connected as input to a bistable circuit 17 such that each input pulse received by the bistable circuit 17 changes the stable state of the circuit. An output 18 of circuit 17 which is active when circuit 17 is in the stable state representative of an "on" condition is connected as one input to an *and* circuit 19. The other input of *and* gate 19 is connected to a suitable oscillator, for example the cathode ray tube clock oscillator, and the output of *and* gate 19 is connected to a counter 20. Counter 20 counts the pulses generated by the oscillator connected to *and* gate 19 for the period during which *and* gate 19 is open due to bistable circuit 18 being "on". Bistable circuit 18 is "on" in the interval between detection of the peaks of the pulses generated by an electron beam crossing apertures 14. The count is thus representative of the time interval between detection of the pulses. The counter 20 is reset, after a suitable interval, by the "off" output 21 of bistable circuit 17, which is connected to counter 20 through a delay device 22. The line flyback pulse may be supplied to a reset terminal of bistable circuitry 17, to ensure it is in the "off" state at the beginning of a line. The counts are stored in a digital store 23 at positions representative of the raster lines. This may be achieved by supplying to the addressing circuitry 24 of the store 23 the value of the current line count. All data terminals have a line counter from which this value may be taken. Referring to Figure 5, the values $t_1$ to $t_2$ and $t_3$ for the respective raster lines N, (N+1) and (N+2) are held in store 23. The values may be used in one of two ways. Store 23 can hold "ideal" values of $t_1$, $t_2$ and $t_3$, which are the values these time intervals should have if the raster were correctly positioned on the shadow mask. By subtracting the derived values of $t_1$, $t_2$ and $t_3$ respectively from the ideal values the actual position relative to the ideal position of the raster can be determined. If, for example, the derived $t_1$ were greater than the ideal $t_1$ the raster is positioned too low and a small additional current may be supplied to the frame timebase signal to reposition the first line of the raster higher on the shadow mask. If, on the other hand, the derived value of $t_1$ were less than the ideal value the raster would be too high relative to the ideal position and less frame timebase current is supplied to position the first line of the raster lower on the shadow mask. While it is only necessary to perform the subtraction for one raster line, it is preferred to do it for three to allow for inaccuracies in determining the values of the intervals $t$. The use of the three lines permits a majority vote to be take. The subtractions may be executed in a purpose-built comparator but it is preferred that the store 23 should form part of a microprocessor associated with the cathode-ray tube. The positional information may also be used in a colour cathode-ray tube to correct convergence by applying increments of current to the convergence coils.

An alternative method of deriving positional information from the values $t_1$, $t_2$ and $t_3$ is illustrated in Figure 7 where PQ represents a line through the centre of right hand aperture 14 of Figure 5 and PR is the perpendicular from P (Fig. 5) to the raster lines N, N+1 and N+2. The distance PS from P to raster line N+1 is calculated and compared with an ideal value. We take the unit of length to be the distance between the two raster lines.

$$t_2 = 2 \cdot PS \cdot \tan QPR \qquad (i)$$

But $\tan QPR = (t_2 - t_1)/2 = (t_3 - t_2)/2 = (t_3 - t_1)/4$

To allow for errors in determining $t_1$, $t_2$ and $t_3$, all three values are calculated and averaged. The result is substituted in (i) and the value of PS obtained. It will be noted that the divisors 2 cancel so that for greater accuracy the full values $t_1$, $t_2$ and $t_3$ may be used instead of the half values. After comparison with the ideal value, the frame timebase is adjusted to reposition the raster.

The procedure can be repeated for each electron beam of a colour cathode-ray tube thereby ensuring vertical convergence. Other patterns of aperture which give distinctive current signals can be used.

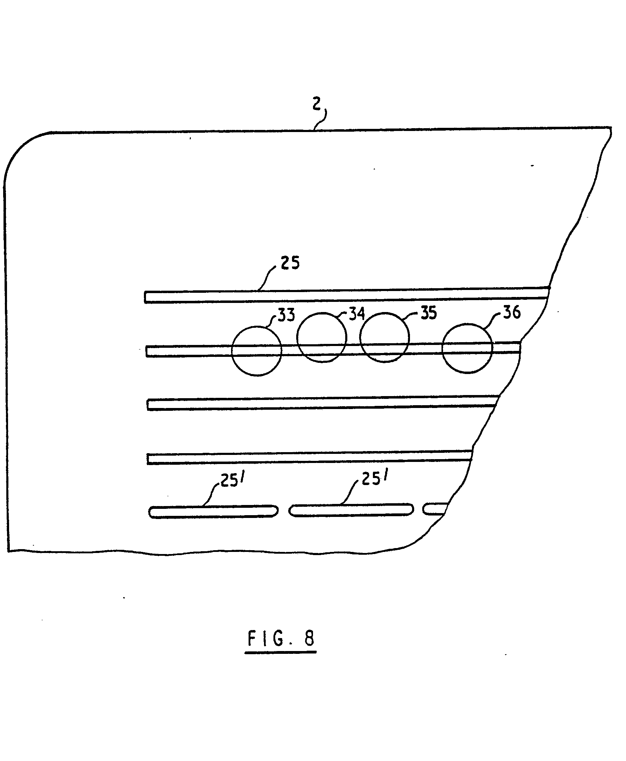

In a further embodiment of the invention, herein described wihh reference to Figures 8 to 14, and the subject of our copending European Patent Application No. 80102083.5 (Publication No. 20909), from which the following description is taken, the shadow mask is provided with slits which extend from one side to the other of the display area. The electron beam, or beams in the case of a multigun colour cathode-ray tube, are caused to trace a line raster of which each line is collinear with a respective one of the slits.

Referring to Figure 8, the shadow mask 2 used in this embodiment is of conventional construction, differing from known masks only in the number of apertures and the relative orientation of the apertures and the raster scan. The apertures are in the form of straight slits 25, and rows of slots 25', extending at least from one edge to the opposite edge of the region in which a display is generated. For convenience, the apertures will be referred to as slits, which term comprehends both the slits 25 and the rows of slots 25'. The shadow mask 2 is used in a colour multi-gun cathode-ray tube of which the beams are caused to trace a line raster, which may be interlaced. There is one line of the raster to each slit 25 and the lines of the raster are caused to coincide with the slits 25 i.e. the raster lines are collinear with the slits 25. Although in practice it is found most convenient to provide a horizontal line raster, in which case the shadow mask 2 is as shown in Figure 8, the invention can also be applied to a vertical line raster, in which case the slits 25 are disposed vertically. With a horizontal line raster, the electron guns of a cathode-ray tube should be arranged so as to subtend different vertical angles to the slits 25. While it is preferred to have the guns arranged in-line perpendicular to the slits 25, it is also possible to have a delta gun arrangement with one side of the trangle of which the guns are the apices perpendicular to the slits.

By way of example, there may be 512 horizontal slits each .13 mm wide and with centres spaced at a distance of .39 mm. In conjunction with phosphor stripes .092 mm wide, this provides clipping and leaving tolerances of .019 mm for the maintenance of colour purity. As is usual practice, the inner walls of the slits are tapered to a point to prevent beam electrons, scattered by impact with the side walls, activating screen phosphors to generate unwanted colours. This may be done by etching the slits from only one side of the mask so that the beam exit aperture is wider than the entrance aperture.

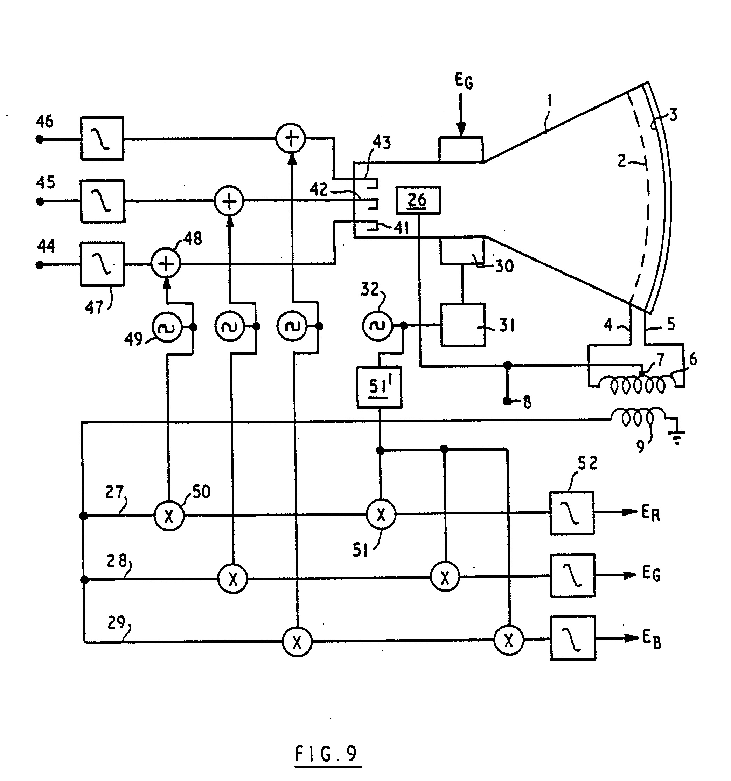

Figure 9 shows the system whereby positional information is derived using the shadow mask 2 of Figure 8. Referring to Figure 8, in which the circles 33 to 36 represent different positions of an electron beam, it will be seen that the difference current is at a minimum when the beam is symmetric to the slit 2 and increases with the asymmetry of the beam relative to the slit. To detect the difference currents the arrangement of Figure 1 is used. It will be noted that the centre tap 7 is connected to the final anodes 26 of the electron guns. The potential of point 8 may be, for example 20kV. The means for detecting difference currents does not interfere with the usual arrangement for generating the electron beams and directing them at the screen. The secondary coil 9 of the transformer is connected at one end to earth and at the other to three channels 27 to 29 in which error signals for the control of the red, green and blue electron beams are derived from the difference current signal appearing in secondary coil 9. The control problem is complicated by the fact that three electron beams are simultaneously directed at the screen. Further, each beam is modulated by a video signal. The beams can be distinguished by time division multiplexing but it is preferred to use frequency division multiplexing. The ambiguity in the sign of the tracking error is removed by imposing on each beam a spot-wobble or dither. This produces an error signal which is clearly recognisable and readily useable. Referring to Figure 9, the cathode-ray tube 1 has vertical deflection coils 30 which are supplied with a vertical deflection current by driver circuitry 31. An oscillator 32 supplies to the driver circuitry 31 a sinusoidal frequency $F_D$ which is superimposed on the conventional vertical deflection waveform. The effect is to oscillate each beam as shown in part in Figure 8 where the references 33 to 36 illustrate landing positions during one halfwave of the oscillation, assuming the beam to be correctly tracking the slit 2. The amplitude of the oscillation is chosen such that the oscillation causes about a $\pm 5\%$ variation in the currents generated in the shadow mask and at the screen. The variation in image brightness due to the oscillation will be less than this in a tube having negative purity margin (phosphor stripe width smaller than electron spot). This is because in such a tube the width of a phosphor stripe is less than the slit width by twice the leaving tolerance. Consequently the phosphor will only be struck by electrons from near the centre of the Gaussian intensity curve, where the slope of the curve is relatively gradual. In cathode-ray tube apparatus designed to be operated as a data terminal the video information is supplied in discrete form at a rate known as the pel frequency. In order to prevent beating between the dither and the video modulation, $F_D$ is synchronised with, or preferably is derived from the same source as the pel frequency generator. Thus, the element shown as 32 in Figure 9 can be the oscillator from which the basic timing of the apparatus is derived and the frequency $F_D$ merely one output of this oscillator.

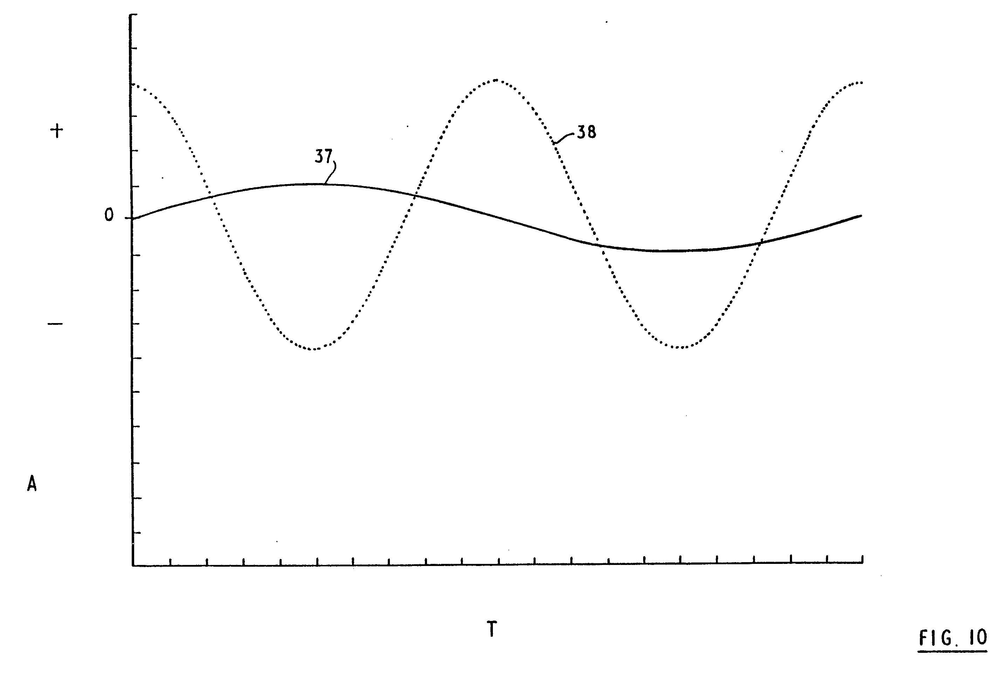

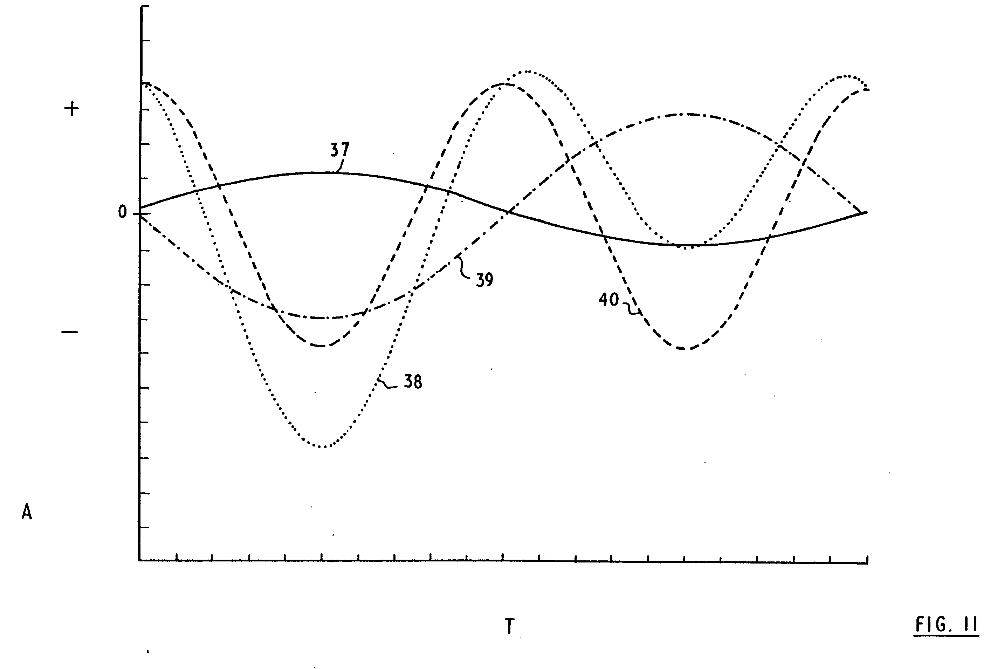

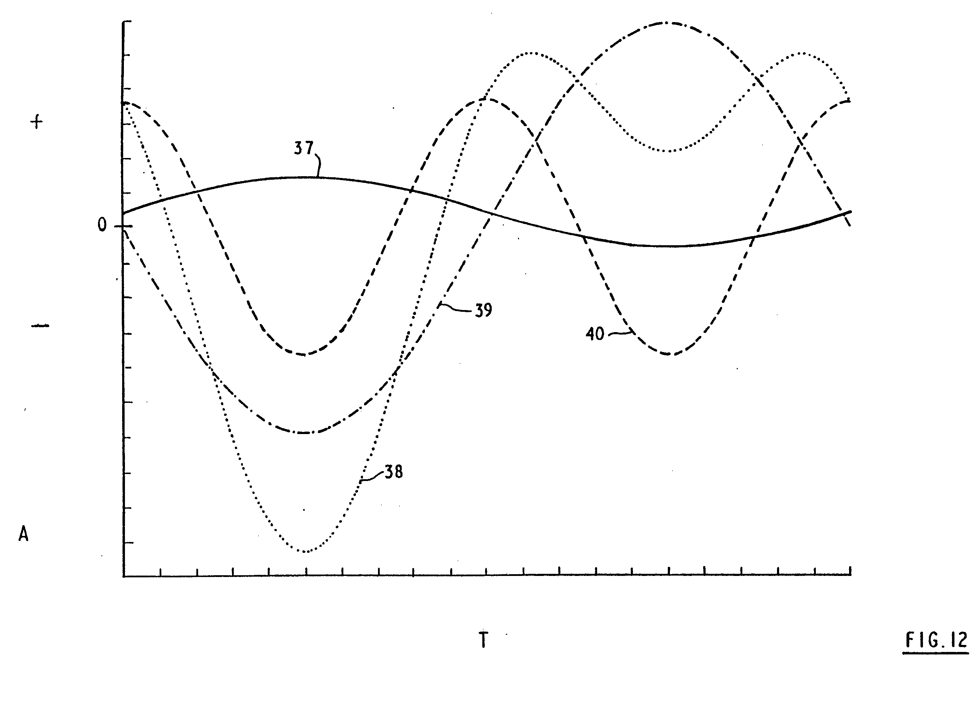

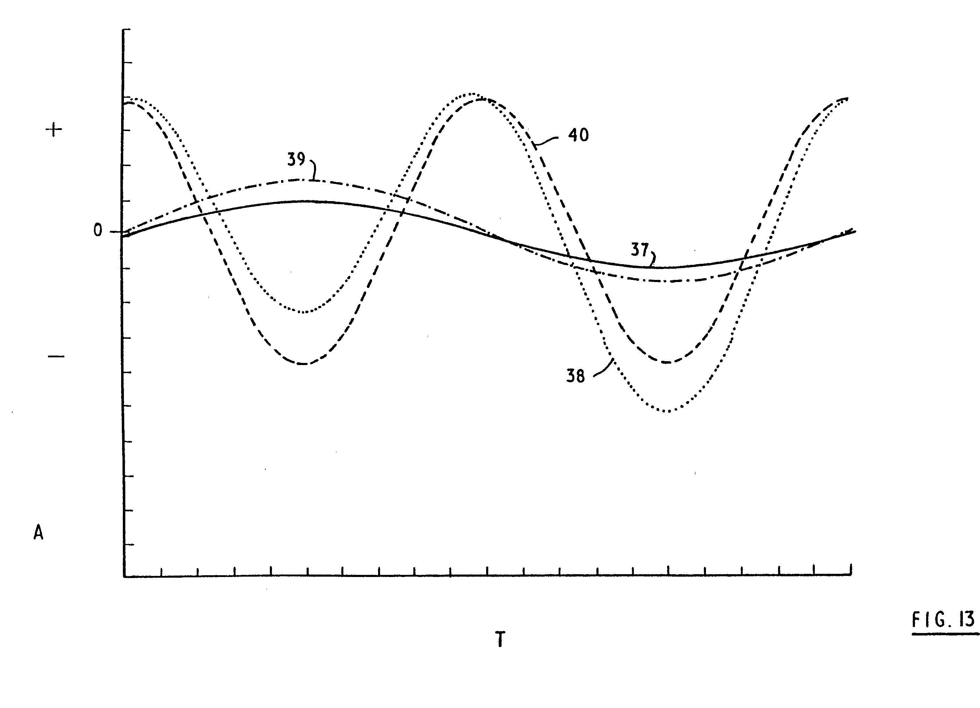

The dither signal $F_D$ moves the electron beams relative to the shadow mask apertures and thus modulates the currents at $F_D$, $2F_D$ and higher harmonics. On the assumption that the electron beams have an intensity distribution which is approximately Gaussian, only the fundamental and second harmonic are significant. Figures 10 to 13 are plots of amplitude against time of the fundamental and second harmonic of the difference current detected at coil 9. The graphs also illustrate the displacement of an electron beam relative to a slit. Curve 37 of Figure 10 represents the position of a beam which is coincident with the slit apart from the movement imposed by the dither signal. In this case the AC component of the difference current waveform 38 contains no fundamental and is almost entirely composed of the second harmonic of the dither frequency. The case in which the beam is slightly misaligned with the slit in the positive direction is shown in Figure 11. Curve 37 starts at some positive value on the vertical axis. The AC component of the difference current waveform 38 is now asymmetrical, but it is significant that there is now a detectable fundamental 39 of given phase and amplitude. The second harmonic 40 is also shown. Figures 12 and 13 show situations in which the beam is differently misaligned with the slit. In Figure 12 the misalignment is twice as far in the same direction as in Figure 11 and in Figure 13 the misalignment is half as far as, and in the opposite direction to that in Figure 11. Comparing the fundamental curves 39 in Figures 11 to 13, it is seen that the fundamental indicates in phase the direction, and in amplitude, the amplitude of the misalignment of the beam with the slit. Extraction of the fundamental thus provides a signal which can be used directly to correct the alignment of the beam with the slit.

Referring to Figure 9, the beams are differentiated by frequency modulation. The red, green and blue guns, 41 to 43, respectively, receive video information at terminals 44 to 46, respectively. For simplicity, we describe only the processing of the red video signal. The red video signal at terminal 44 is filtered in low pass filter 47 of which the cut-off frequency is chosen to be smallest value which will not degrade the video signal appreciably. If the video pel frequency is 20 MHz, the cut-off may be chosen as 40 MHz. The filter 47 may be integrated into the video amplifier design. The filtered red video is then added in summing network 48 to a carrier signal $a(1+\sin 2 F_R t)$ from an oscillator 49. $F_R$, and the corresponding signals in the other video channels, $F_G$ and $F_B$, are chosen above the cut-off frequency of the low pass filter 47 (the filters in each channel are identical) and sufficiently different so as to avoid side band overlap after amplitude modulation by the dither signal. The three frequencies should also be non-harmonically related to avoid mutual interference due to non-linear distortion. For example $F_R=60$ MHz, $F_G=70$ MHz and $F_B=80$ MHz. A suitable dither frequency $F_D$ is 2 MHz. It will be noted that the presence of the carrier signal in the red video modulating signal means that the beam is never completely extinguished. The factor $a$ should be chosen sufficiently large to give a useable signal but not so large as to reduce contrast significantly. A suitable value for $a$ is 5% of the maximum video signal. Gamma correction of the output of summing network 48 may be required to linearize the I—V characteristic of the cathode-ray tube.

The difference currents detected in coil 9 are supplied to the red, green and blue error signal channels 27 to 29 respectively. The red channel 27 includes a demodulator 50 which mixes the signal from coil 9 with the carrier frequency 2 $F_R t$. Ideally, this demodulator performs the analogue multiplication of its inputs. A second demodulator 51 mixes the output of demodulator 50 with the dither frequency, $\sin 2 F_D t$. An adjustable delay 51' is provided for synchronisation. Finally, a low pass filter 52 with a cut-off somewhat less than $F_D$ produces at its output the error signal $E_R$ due to the red beam. In similar fashion, error signals $E_G$ and $E_B$ due to the green and blue beams, respectively, are produced at the outputs of the green and blue error signal channels 28 and 29 respectively.

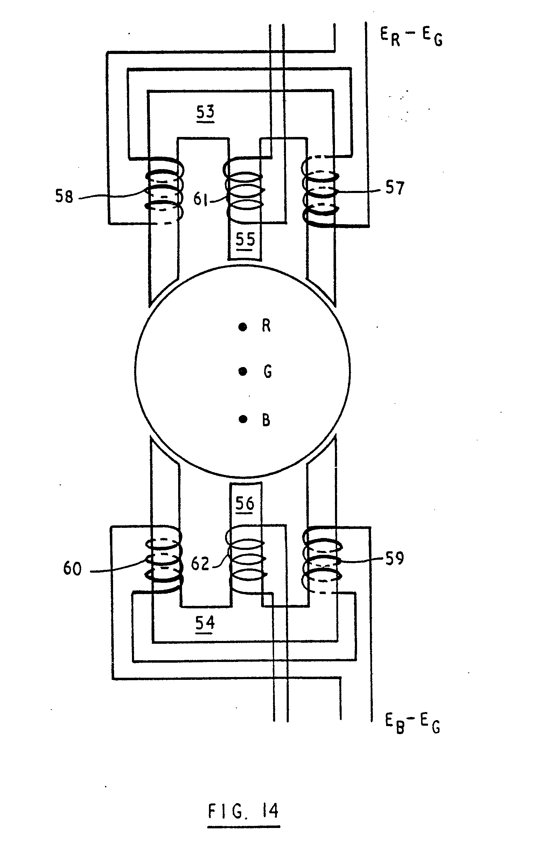

Figure 14 illustrates one way in which the error signals $E_R$, $E_G$ and $E_B$ can be used. The figure shows a cross-section of the neck of the cathode-ray tube with the electron beams R, G and B emanating from in-line guns arranged perpendicularly of the slits. Surrounding the neck of the tube is a known convergence correction device consisting of two three-poled armatures 53, 54 with centre poles 55, 56 on the line of the electron beams. The outer poles are wound with series-connected coils 57, 58 and 59, 60, respectively, which receive signals to correct the vertical component of misconvergence of the blue and red electron beams relative to the green beam. The coils 61, 62 wound on the centre poles correct the horizontal component of misconvergence by adjusting the horizontal position of the red and blue beams relative to the green beam. Any of the standard techniques can be used to calculate or derive the appropriate signals for the coils 61, 62. The correction of horizontal misconvergence forms no part of this invention. The arrangement of Figure 14 has the advantage that the outer beams are separately controllable: armature 54 controls the blue beam and armature 53 controls the red beam. A signal $E_B-E_G$ can be applied directly to the coils 57, 58 while a signal $E_R-E_G$ can be applied directly to the coils 59, 60. The signal $E_G$ is supplied directly to the vertical deflection coils 30 (Figure 9). The effect of $E_G$ is to adjust the vertical position of all three beams until the green beam is aligned with the slit. The signals $E_R-E_G$ and $E_B-E_G$ adjust the vertical positions of, respectively, the red and the blue beams. The signals $E_B-E_G$ and $E_R-E_G$ are derived by subtracting the signal $E_G$ from the signals $E_B$ and $E_R$, respectively, using conventional subtracting networks.

In order to prevent the different beams locking on different slits, two modifications of the system described with reference to Figures 9 to 14 may be found desirable. To ensure that the beams start together in the top slit, initial correction currents $E_B-E_G$, $E_R-E_G$ and $E_G$ should be supplied to the coils 57 and 58, 59 and 60, and 30, respectively, at the beginning of each frame scan which position the beams at the lefthand end of the top slit. The initial currents may be derived from adjustable resistors connected to a suitable potential source. To ensure that the beams all track the correct slit after line flyback, the first correction signals applied to each line, before feedback information is available, are those applied to the preceding line. The signals $E_B$, $E_G$ and $E_R$ are sampled a short interval after the start of a line in conventional sample and hold circuits and the sample values are supplied to the correction coils at the conclusion of the line blanking signal, which is on during the line flyback period.

The remaining elements of cathode-ray tube apparatus according to the invention are conventional. It is preferred that the vertical deflection be effected by means of a staircase signal instead of the more usual ramp signal. The staircase signal can be generated by means of any of the commonly available integrated digital-to-analogue converters to which the input is provided by a counter driven by a suitable oscillator.

Although reference has been made to deflection coils, thereby implying that the description relates only to electromagnetic deflection systems, it is to be understood that the invention is applicable also to electrostatic or mixed electromagnetic/electrostatic systems. The term "deflection coils" is intended to comprehend the deflection means used in any of the conventional deflection systems.

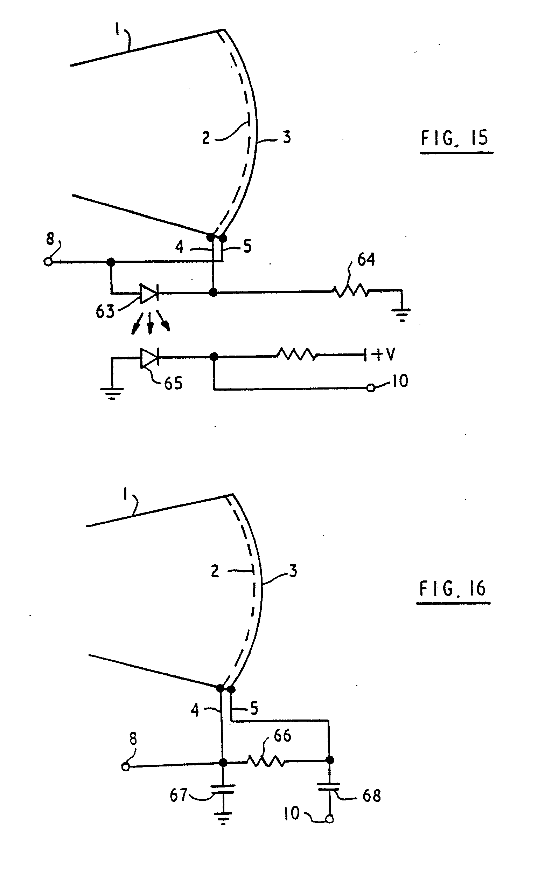

Arrangements for detecting directly the beam currents intercepted by the shadow mask are shown in Figures 15 and 16. The embodiment of Figure 15 uses an optical coupling to perform the high voltage isolation function of the transformer of the embodiment of Figure 1. The high potential (EHT) terminal 8 is connected directly, through conductor 5, to the conductive layer 3 at the screen of the cathode-ray tube 1, and is connected through a light-emitting diode (LED) 63 and conductor 4 to the shadow mask. A bias resistor 64 may be provided if the characteristics of LED 63 make it desirable. A radiation detecting element 65 is connected between ground and terminal 10 at which a signal representative of the mask current appears. LED 63 may be GaAs, in which case the radiation emitted is largely in the infra red band.

A suitable LED is a TIES 36 made by Texas Instruments. In this case element 65 is preferably of silicon and may be a silicon phototransistor. It is thought, however that the response of a phototransistor would be too slow for some applications and it is preferred that element 65 should be a silicon avalanche photodiode, for example a TIED 69, also made by Texas Instruments. In contrast with the transformer coupling of Figure 1, the embodiment of Figure 15 is DC coupled, which may be advantageous in certain circumstances. In addition the low dynamic impedance of the LED 63 largely short circuits the capacitance between the shadow mask and screen. This makes it easier to achieve a large signal bandwidth.

Figure 16 shows an embodiment using capacitors. EHT terminal 8 is connected directly to shadow mask 2 through conductors 4, and through resistor 66 and conductor 5 to conductive layer 3. The junction of resistor 66 and conductor 4 is connected to ground through bypass capacitor 67. The other end of resistor 66 is connected to terminal 10, at which a signal proportional to the screen current appears through a capacitor 68 which isolates the EHT from the circuitry connected to terminal 10.

In the embodiment of Figure 15, and LED can be connected in conductor 5 and its output as detected by a radiation detector will represent the beam current generated at the screen. The outputs of the radiation detectors can be differenced in a conventional subtraction circuit to derive the difference currents.

There has been described shadow mask colour cathode-ray tube apparatus with means to derive a signal representative of the electron beam current intercepted by the shadow mask. This signal may be the electron beam current in the shadow mask, in the conductive layer at the screen of the tube, or the difference between these currents. The signals have been isolated from the EHT applied to the tube and screen by a transformer or by optical or capacitive decoupling. Shadow masks with aperture patterns such as to produce distinctive signals have also been described.

## Claims

1. A colour cathode ray tube apparatus including a multi-beam colour cathode ray tube (1) having a shadow mask (2), means (30) for scanning said electron beams in a raster scan, and means (6, 7, 9; 63 to 65; 66 to 68) for deriving a signal representative of the electron beam current intercepted by the shadow mask (2), characterised in that said apparatus further comprises feedback means (16 to 24; 27 to 29, 50, 52 to 62) to adjust the position of the raster scan in accordance with said derived signal so as to tend to reduce the proportion of beam current intercepted by the shadow mask.

2. Apparatus as claimed in claim 1, in which said derived signals are isolated from the extra high tension (EHT) supplied to said cathode ray tube by means of transformer, optical or capacitive decoupling means (6 and 9, 63 and 65, 68).

3. Apparatus as claimed in either preceding claim, characterised by means for frequency modulating (48, 49) each beam at a different frequency whereby said deriving means can derive a separate signal for each beam.

4. Apparatus as claimed in any preceding claim, characterised by means (30 to 32) for imposing a wobble on each beam thereby to determine the direction of shift of position of the raster scan.

5. Apparatus as claimed in any one of the preceding claims, characterised in that the shadow mask is provided with apertures so shaped and so disposed as to generate distinctive signals indicative of the positions at which an electron beam intercepts the apertures.

6. Apparatus as claimed in claim 5, characterised in that the apertures are slots arranged in pairs to form Vs.

7. Apparatus as claimed in any preceding claim, characterised in that the said means to derive a signal comprises means to detect the difference between the currents generated by the electron beam at the shadow mask and at the screen.

8. Apparatus as claimed in claim 7, characterised by a transformer having a primary winding (6), one end (4) of which is connected to the shadow mask (2) and the other end (5) of which is connected to a conductive layer at the cathode ray tube screen (3), a centre tap (7) on the primary winding to which a high potential source is connected, the transformer also having a secondary winding (9) in which, in operation, said difference current is generated.

9. Apparatus as claimed in any of claims 1 to 6, characterised in that the said means to derive a signal comprises means to detect the current generated by the electron beam in the shadow mask.

10. Apparatus as claimed in any of claims 1 to 6, characterised in that the said means to derive a signal comprises means to detect the current generated by the electron beam in the conductive layer at the tube screen.

## Revendications

1. Un appareil à tube cathodique couleur comprenant un tube cathodique couleur à faisceaux multiples (1) comportant un masque perforé (2), des moyens (30) pour balayer lesdits faisceaux d'électrons selon un balayage de trame et des moyens (6, 7, 9, 63 à 65, 66 à 68) pour deriver un signal représentant le courant du faisceau d'électrons intercepté par le masque perforé (2), caractérisé en ce que ledit appareil comprend en outre des moyens de réaction (16 à 24, 27 à 29, 50, 52 à 62) pour régler la position du balayage de trame selon ledit signal dérivé de façon à tendre à la réduction de la proportion du courant de faisceau intercepté par le masque perforé.

2. Appareil selon la revendication 1, dans lequel lesdits signaux dérivés sont isolés de la très haute tension (EHT) délivrée audit tube cathodique par l'intermédiaire d'un transformateur de moyens de découplage optiques ou capacitifs (6 et 9, 63 et 65, 68).

3. Appareil selon l'une ou l'autre des revendications précédentes, caractérisé par des moyens pour moduler en fréquence (48, 49) chaque faisceau à une fréquence différente, ce qui permet auxdits moyens de dérivation de dériver un signal séparé pour chaque faisceau.

4. Appareil selon l'une quelconque des revendications précédentes, caractérisé par des moyens (30 à 32) pour imposer une vobulation à chaque faiseau pour déterminer ainsi la direction du décalage de la position du balayage de trame.

5. Appareil selon l'une quelconque des revendications précédentes, caractérisé en ce que le masque perforé comporte des ouvertures dont la forme et la disposition permettent la génération de signaux distincts indiquant les positions où un faisceau d'électrons intercepte les ouvertures.

6. Appareil selon la revendication 5, caractérisé en ce que les ouvertures sont des fentes disposées par paires pour former des "V".

7. Appareil selon l'une quelconque des revendications précédentes, caractérisé en ce que lesdits moyens pour dériver un signal comprennent des moyens pour détecter la différence entre les courants générés par le faisceau d'électrons au niveau du masque perforé et au niveau de l'écran.

8. Appareil selon la revendication 7, caractérisé par un transformateur comportant un enroulement primaire (6) dont une extrémité (4) est connectée au masque perforé (2) et l'autre extrémité (5), connectée à une couche conductrice située au niveau de l'écran du tube cathodique (3), une prise centrale (7) sur l'enroulement principal à laquelle est connectée une source de potentiel élevé, le transformateur comportant également un enroulement secondaire (9) dans lequel, en fonctionnement, est généré ledit courant différentiel.

9. Appareil selon l'une quelconque des revendications 1 à 6 caractérisé en ce que lesdits moyens pour dériver un signal comprennent des moyens pour détecter le courant généré par le faisceau d'électrons dans le masque perforé.

10. Appareil selon l'une quelconque des revendications 1 à 6, caractérisé en ce que lesdits moyens pour dériver un signal comprennent des moyens pour détecter le courant généré par le faisceau d'électrons dans la couche conductrice située au niveau de l'écran du tube.

## Patentansprüche

1. Farbkathodenstrahlröhren-Einheit unter Einbeziehen einer Mehrstrahl-Farbkathodenstrahlröhre (1) mit Lochmaske (2), Maßnahmen (30) zur Ablenkung besagter Elektronenstrahlen in Rasterabtastung und Maßnahmen (6, 7, 9, 63 bis 65, 66 bis 68) zur Ableitung eines dem von der Lochmaske (2) aufgefangenen Strahlstrom entsprechenden Signals, dadurch gekennzeichnet, daß besagte Einheit weiterhin Rückkopplungsmaßnahmen (16 bis 24; 27 bis 29, 50, 52 bis 62) enthält, um die Rasterabtastposition entsprechend besagtem abgeleiteten Signal so zu korrigieren, daß darauf abgezielt wird, den von der Lochmaske abgefangenen Strahlstromanteil herabzudrücken.

2. Anordnung nach Anspruch 1, dadurch gekennzeichnet, daß hierin besagte abgeleitete Signale gegenüber der der Kathodenstrahlröhre zugeführten Höchstspannung mittels Transformator oder optischer oder kapazitiver Entkopplungsmaßnahmen (6 und 9, 63 und 65, 68) isoliert sind.

3. Anordnung nach einem der vorhergehenden Ansprüche, gekennzeichnet durch Maßnahmen zur Frequenzmodulation (48, 49) der Strahlen mit jeweils unterschiedlicher Frequenz, indem besagte Ableitungsmaßnahmen für jeden Strahl je ein besonderes Signal abzuleiten vermögen.

4. Anordnung nach einem der vorhergehenden Ansprüche, gekennzeichnet durch Maßnahmen (30 bis 32) zum Aufdrücken eines Wobbelsignals auf jeden Strahl, um somit die Verschiebungsrichtung der Rasterabtastposition festzulegen.

5. Anordnung nach einem der vorhergehenden Ansprüche, dadurch gekennzeichnet, daß die Lochmaske derart gestaltete und angeordnete Löcher enthält, daß charakteristische Signale zur jeweiligen Anzeige von Positionen, an denen ein Elektronenstrahl auf die Löcher trifft, erzeugt werden.

6. Anordnung nach Anspruch 5, dadurch gekennzeichnet, daß die Löcher paarweise V-artig angeordnete Schlitze sind.

7. Anordnung nach einem der vorhergehenden Ansprüche, dadurch gekennzeichnet, daß besagte Maßnahmen zur Ableitung eines Signals Mittel zum Erfassen der Differenz zwischen den Strömen, die durch den Elektronenstrahl an der Lochmaske und am Bildschirm hervorgerufen werden, einschließen.

8. Anordnung nach Anspruch 7, gekennzeichnet durch einen Transformator sowohl mit Primärwicklung (6), von der ein Ende (4) an die Lochmaske (2) angeschlossen ist, deren anderes Ende (5) mit einer leitenden Schicht auf dem Kathodenstrahlröhren-Bildschirm (3) verbunden ist und deren Mittelabgriff (7) an einer Hochspannungsquelle liegt, als auch mit Sekundärwicklung (9), in der bei Betrieb besagte Stromdifferenz entsteht.

9. Anordnung nach einem der Ansprüche 1 bis 6, dadurch gekennzeichnet, daß besagte Maßnahmen zur Ableitung eines Signals Mittel zum Erfassen des durch den Elektronenstrahl in der Lochmaske hervorgerufenen Stroms umfassen.

10. Anordnung nach einem der Ansprüche 1 bis 6, dadurch gekennzeichnet, daß besagte Maßnahmen zur Ableitung eines Signals Mittel zum Erfassen des durch den Elektronenstrahl in der leitenden Schicht auf dem Röhrenbildschirm hervorgerufenen Stroms umfassen.

FIG 1

FIG 2

FIG 3

FIG 4

FIG. 5

RASTER LINE N

RASTER LINE N+1

RASTER LINE N+2

FIG. 6

FIG. 7

2

FIG. 8

FIG.9

FIG. 10

FIG. II

FIG. 12

0 020 910

FIG. 13

0 020 910

FIG. 14

FIG. 15

FIG. 16

10